# EUROPÄISCHE PATENTANMELDUNG

(11) **EP 4 535 031 A1**
(43) Veröffentlichungstag der Anmeldung: **09.04.2025**
(21) Anmeldenummer: 23201887.9
(22) Anmeldetag: 05.10.2023
(51) Int. Cl.: G01S 7/497, G01S 7/40

(54) **PRÜFVORRICHTUNG ZUM PRÜFEN VON LICHTEINFLÜSSEN AUF DIE UMFELD- UND/ODER OBJEKTERKENNUNG DURCH SENSOREN**

(71) Anmelder: CARISSMA Institute of Safety in Future Mobility (C-ISAFE) der Technischen Hochschule Ingolstadt, 85049 Ingolstadt (DE)
(72) Erfinder: Brandmeier, Thomas, 93077 Bad-Abbach (DE); Lugner, Robert, 85055 Ingolstadt (DE); Steinhauser, Dagmar, 85051 Ingolstadt (DE); Huber, Robert, 06886 Luth. Wittenberg (DE); Schneider, Kilian, 86159 Augsburg (DE)
(74) Vertreter: Canzler & Bergmeier Patentanwälte Partnerschaft mbB

(57) **Zusammenfassung**

Eine Prüfvorrichtung (1) zum Prüfen von Lichteinflüssen auf die Umfeld- und/oder Objekterkennung durch Sensoren (3), insbesondere durch Umfeldsensoren von Kraftfahrzeugen (14), weist wenigstens einen Lichtsimulator (4) mit wenigstens einem Lichtstrahler (5) zur Simulation verschiedener Lichtbedingungen innerhalb eines Prüffeldes sowie eine Steuereinheit (9) zum Ansteuern des wenigstens einen Lichtstrahlers (5) des Lichtsimulators (4) auf. Der Lichtsimulator (4) ist auf einem verfahrbaren Fahrgestell (8) montierbar und die Steuereinheit (9) ist ausgebildet, dem Fahrgestell (8) eine Bahnkurve vorzugeben, entlang welcher das Fahrgestell (8) zumindest in einer Längs- und einer Querrichtung innerhalb des Prüffeldes (7) verfahrbar ist.

## Beschreibung

Die vorliegende Erfindung betrifft eine Prüfvorrichtung zum Prüfen von Lichteinflüssen auf die Umfeld- und/oder Objekterkennung durch Sensoren, insbesondere durch Umfeldsensoren von Kraftfahrzeugen. Die Prüfvorrichtung weist wenigstens einen Lichtsimulator mit wenigstens einem Lichtstrahler zur Simulation verschiedener Lichtbedingungen innerhalb eines Prüffeldes sowie eine Steuereinheit zum Ansteuern des wenigstens einen Lichtstrahlers des Lichtsimulators auf. Weiterhin betrifft die Erfindung ein Verfahren zum Testen von Lichteinflüssen auf die Umfeld- und/oder Objekterkennung von Sensoren, insbesondere von Umfeldsensoren von Kraftfahrzeugen, mit einer derartigen Prüfvorrichtung.

Moderne Fahrzeuge verfügen heute über zahlreiche Sensoren, die den Fahrer beispielsweise beim Einparken unterstützen, die helfen, den Abstand zum vorausfahrenden Fahrzeug zu halten oder Hindernisse erkennen, beispielsweise auch zur Objekterkennung bei Ausweichmanövern. Diese sogenannten Umfeldsensoren sind auch wesentlich für das automatisierte Fahren, da sie die Umgebung des Fahrzeugs vollständig und zuverlässig erfassen müssen. Als Umfeldsensoren kommen beispielsweise Ultraschallsensoren, Kameras, Radar- und Lidar-Sensoren in Frage, die das Umfeld detektieren und unfallvermeidende und unfallfolgenvermindernde Maßnahmen veranlassen. Bei optischen Sensoren, insbesondere bei Lidar-Sensoren und Kameras, sind jedoch Störeinflüsse durch verschiedene oder auch schnell wechselnde Lichtbedingungen ein großes Problem, da sie die zuverlässige Objekterkennung beeinträchtigen. Insbesondere die Kamera ist anfällig für Störungen durch schnelle Änderungen der Belichtung, dunkle Bedingungen mit geringen Kontrasten oder starke Überbelichtung. Andere Fahrzeuge oder Personen können somit von den Systemen zu spät oder gar nicht erkannt werden. Um die Sensoren zu optimieren, ist es deshalb erforderlich, die Lichtverhältnisse, bei denen Objekte nicht oder nicht mehr erkannt werden, mittels verschiedener Tests genau zu bestimmen. Dabei ist es wesentlich, die Lichtbedingungen möglichst realitätsnah im Hinblick auf Lichtverhältnisse, Wellenlängen, Farbspektren und Intensitäten auszugestalten.

Aus der DE 10 2014 013 236 B4 ist eine Prüfvorrichtung zum automatisierten Prüfen der Funktionsfähigkeit eines Fahrzeugs bekannt, bei welchem die Scheinwerfer eine bestimmte Lichtverteilung in Abhängigkeit von Gegenlicht eines anderen Verkehrsteilnehmers erzeugen. Mittels einer Lichterzeugungseinrichtung kann ein Lichtszenario zur Simulation anderer Verkehrsteilnehmer erzeugt werden. Weiterhin kann mittels einer Sensoreinrichtung erfasst werden, ob das Fahrzeug die Lichtverteilung in Reaktion auf das Lichtszenario wie erwartet einstellt. Die Lichterzeugungseinrichtung umfasst mehrere durch eine Steuereinrichtung einzelnen steuerbare Lichtquellen. Die Lichterzeugungseinrichtung ist dabei an einer Seite einer Halle so angeordnet, dass sie auf die Front eines sich in Prüfposition befindlichen Fahrzeugs gerichtet ist. Das Fahrzeug wird durch einen Prüfer in die Prüfposition in der Halle gefahren und nach beendeter Prüfung durch diesen auch wieder aus der Halle herausgefahren.

In der EP 3 620 770 A1 wird ein Prüfstand mit einem Umfeldsimulationssystem beschrieben. Das Umfeldsimulationssystem umfasst wenigstens eine Umfeldsimulationsvorrichtung, die relativ zu einem Testobjekt wie beispielsweise einem Fahrzeug frei bewegbar ist. Die Umfeldsimulationsvorrichtung kann dabei durch eine Simulationszentrale gesteuert werden und ist gemäß einem beliebigen Bewegungsablauf im Testfeld bewegbar. Durch die eine oder mehrere Umfeldsimulationsvorrichtung(-en) wird ein reales Umfeld für das Fahrzeug bzw. dessen Sensoren nachgebildet, also beispielsweise Hinnisse oder andere Verkehrsteilnehmer simuliert. Nach einer Ausführung kann weiterhin auch noch eine Umweltsimulationsvorrichtung angeordnet sein, um Umweltbedingungen wie Regen, verschiedene Lichtverhältnisse, Wind, Blitze u.ä. zu erzeugen.

Aufgabe der vorliegenden Erfindung ist es, eine Prüfvorrichtung zum Prüfen von Lichteinflüssen auf die Umfeld- und/oder Objekterkennung durch Sensoren sowie ein entsprechendes Verfahren vorzuschlagen, mit deren Hilfe viele unterschiedliche Testszenarien möglichst realitätsnah nachgebildet werden können.

Die Aufgabe wird gelöst mit den Merkmalen der unabhängigen Ansprüche.

Eine Prüfvorrichtung zum Prüfen von Lichteinflüssen auf die Umfeld- und/oder Objekterkennung durch Sensoren, insbesondere durch Umfeldsensoren von Kraftfahrzeugen, weist wenigstens einen Lichtsimulator mit wenigstens einem Lichtstrahler zur Simulation verschiedener Lichtbedingungen innerhalb eines Prüffeldes auf. Weiterhin weist die Prüfvorrichtung eine Steuereinheit zum Ansteuern des wenigstens einen Lichtstrahlers des Lichtsimulators auf.

Es wird vorgeschlagen, dass der Lichtsimulator auf einem verfahrbaren Fahrgestell montierbar ist und dass die Steuereinheit ausgebildet ist, dem Fahrgestell eine Bahnkurve vorzugeben, entlang welcher das Fahrgestell zumindest in einer Längs- und einer Querrichtung innerhalb des Prüffeldes verfahrbar ist.

Die Vorteile der Prüfvorrichtung werden auch mit einem Verfahren zum Testen von Lichteinflüssen auf die Umfeld- und/oder Objekterkennung von Sensoren, insbesondere von Umfeldsensoren in Kraftfahrzeugen, mit einer derartigen Prüfvorrichtung erzielt, welches somit ebenfalls beansprucht wird.

Weiterhin wird die Verwendung einer solchen Prüfvorrichtung zum Prüfen von Lichteinflüssen auf die Umfeld- und/oder Objekterkennung von Umfeldsensoren in Kraftfahrzeugen beansprucht.

Dadurch, dass der Lichtsimulator gemäß einer vorgegebenen Bahnkurve gesteuert bewegt werden kann, ist es möglich, wesentlich mehr und unterschiedlichere Testszenarien darzustellen als mit den stationären Lichtsimulatoren des Standes der Technik. Weiterhin ist es auch möglich, diese verschiedenen Testszenarien reproduzierbar durchzuführen und dadurch gleiche Bedingungen für verschiedene Fahrzeuge bzw. zu verschiedenen Zeitpunkten zu schaffen. Insbesondere ist es durch die gesteuerte Bewegbarkeit des Lichtsimulators möglich, Szenarien wie beispielsweise Blendung durch Gegenverkehr, Kurvenfahrten, Tunneldurchfahrten, querende Radfahrer u.ä. auch in ihrem Verlauf mit sich zeitlich und örtlich ändernden Lichtverhältnissen nachzubilden.

Besonders vorteilhaft ist es dabei, wenn die Steuereinheit weiterhin ausgebildet ist, dass Fahrgestell auch in einer Hochrichtung innerhalb des Prüffeldes zu verfahren. Hierdurch ist es beispielsweise auch möglich, einen Verlauf des Sonnenstandes mit unterschiedlichen Sonnenstandshöhen nachzubilden oder generell auch Lichtereignisse von oben zu simulieren.

Nach einer alternativen Ausführung ist der Lichtstrahler des Lichtsimulators mittels der Steuereinheit während des Verfahrens des Fahrgestells entlang der Bahnkurve entlang einer Hochachse des Lichtsimulators verfahrbar. Auch hierdurch ist es möglich, Lichtereignisse von oben und aus unterschiedlichen Höhen zu simulieren und insbesondere auch, einen Verlauf des Sonnenstandes nachzubilden.

Vorteilhaft ist es auch, wenn die Prüfvorrichtung ein verfahrbares Fahrgestell umfasst und der Lichtsimulator auf dem verfahrbaren Fahrgestell montiert ist. Der Lichtsimulator und das Fahrgestell bilden hierdurch eine Einheit. Alternativ ist es jedoch auch möglich, den Lichtsimulator beispielsweise auf bereits in Kundenanlagen vorhandenen Fahrgestelle zu montieren. In diesem Fall umfasst die Prüfvorrichtung lediglich den wenigstens einen Lichtsimulator und die Steuereinheit, welche mit dem externen Fahrgestell verbindbar ist.

Das Fahrgestell weist wenigstens einen Antrieb zum Verfahren des Fahrgestell in der Längs- und Querrichtung auf. Das Fahrgestell kann zum Verfahren auf einem Boden der Prüfvorrichtung ausgebildet sein und dazu über lenkbare Räder verfügen. Alternativ kann das Fahrgestell jedoch auch jeweils einen eigenen Antrieb für jede Richtung (insbesondere die Längs- und die Querrichtung) aufweisen auch mittels des jeweiligen Antriebs entlang jeweils einer Führung bewegt werden. Dabei könnte das Fahrgestell prinzipiell auch als Hängefahrzeug ausgebildet sein.

Ebenso bringt es Vorteile mit sich, wenn mittels der Steuereinheit eine Drehung des wenigstens einen Lichtstrahlers um eine Hochachse des Lichtsimulators veränderbar ist und/oder wenn mittels der Steuereinheit eine Neigung des wenigstens einen Lichtstrahlers um eine Querachse veränderbar ist. Vorzugsweise ist dabei eine Drehung des wenigstens einen Lichtstrahlers um die Hochachse um volle 360° möglich. Hierdurch können weiterhin verschiedene Lichteinfallswinkel bezüglich der verschiedenen Raumrichtungen eingestellt werden, sodass auch aufwändigere Testszenarien nachgebildet werden können und die Prüfvorrichtung vielfältiger einsetzbar ist.

Insbesondere ist es dabei vorteilhaft, wenn die Drehung und/oder die Neigung des wenigstens einen Lichtstrahlers während des Verfahrens des Fahrgestells entlang der Bahnkurve veränderbar ist. Testszenarien wie Kurvenfahrten können dabei auch simuliert werden, wenn der Sensor bzw. das Kraftfahrzeug sich stationär in einer Prüfposition befindet.

Besondere Vorteile bringt es weiterhin auch mit sich, wenn mittels der Steuereinheit eine Intensität des wenigstens einen Lichtstrahlers und/oder ein Lichtspektrum des wenigstens einen Lichtstrahlers während des Verfahrens des Fahrgestells entlang der Bahnkurve veränderbar sind. Auch dies trägt dazu bei, auch aufwändige Testszenarien wie z.B. Tunneldurchfahrten möglichst realitätsgetreu nachzubilden. Insbesondere in Verbindung mit der Verfahrbarkeit des Lichtstrahlers und/oder des Fahrgestells in der Hochrichtung sowie der Einstellung der Neigung und Drehung ist es möglich, den Sonnenstand von Sonnenaufgang bis Sonnenuntergang auch mit dem Wechsel des Lichtspektrums und der Lichtintensität sehr naturgetreu nachzubilden. Bei dem Verfahren ist es entsprechend vorteilhaft, wenn mittels der Prüfvorrichtung ein vollständiger Sonnenstandsverlauf simuliert wird, wobei während des Verfahrens des Fahrgestells gleichzeitig die Intensität und/oder das Lichtspektrum und/oder die Drehung und/oder die Neigung des wenigstens einen Lichtstrahlers mittels der Steuereinheit verändert werden.

Um mit dem Lichtstrahler möglichst viele unterschiedliche Lichtverhältnisse darstellen zu können, ist es weiterhin vorteilhaft, wenn der Lichtstrahler mehrere Lichtquellen aufweist, welche durch die Steuereinheit gruppenweise oder einzeln ansteuerbar sind. Vorzugsweise sind dabei mehrere unterschiedliche Lichtquellen in dem Lichtstrahler verbaut, sodass sich nicht nur unterschiedliche Helligkeiten durch Dimmen oder Aus- und Einschalten einer bestimmten Anzahl einzelner Lichtquellen oder Gruppen von Lichtquellen darstellen lässt, sondern auch unterschiedliche Lichtspektren in einem einzigen Lichtstrahler realisiert werden können. Der Lichtsimulator kann hierdurch Wellenlängenbereiche von beispielsweise 380 - 780 nm abdecken und eine Beleuchtungsstärke von bis zu 100.000 lm/m² erreichen. Insbesondere ist es vorteilhaft, wenn eine oder mehrere der Lichtquellen zumindest einen Teil des Infrarotlichtspektrums der Sonne, insbesondere einen Wellenlängenbereich von 850 - 1550 nm abbilden. Hierdurch können Lidar-Systeme gezielt gestört und dadurch geprüft werden.

Entsprechend ist es auch besonders vorteilhaft, wenn die Intensität und/oder das Lichtspektrum und/oder die Drehung und/oder die Neigung des wenigstens einen Lichtstrahlers gleichzeitig mittels der Steuereinheit während des Verfahrens des Lichtsimulators verstellbar sind. Hierdurch ist eine vollständige zeitliche, örtliche und farbliche Nachbildung des Sonnenverlaufs möglich. Hierdurch können beispielsweise Kameras im Zeitraffer mit dem gesamten Tageslicht gestört werden.

Nach einer weiteren vorteilhaften Ausführung der Prüfvorrichtung weist diese wenigstens ein Testobjekt auf, welches mittels der Steuereinheit und/oder einer weiteren Steuereinheit innerhalb des Prüffeldes positionierbar und vorzugsweise entlang einer vorgebbaren Bahnkurve bewegbar ist. Die Prüfvorrichtung hat hierdurch noch vielfältigere Anwendungsmöglichkeiten. Das Testobjekt kann beispielsweise ein durch den zu prüfenden Sensor zu erkennendes Hindernis sein. Dieses kann an unterschiedlichen Stellen innerhalb des Prüffeldes positioniert werden, um die Erkennung durch den zu prüfenden Sensor unter verschiedenen Bedingungen zu testen. Ist das Testobjekt entlang der Vorgehen Bahnbahnkurve bewegbar, kann somit nicht nur die Erkennung statischer Testobjekte bzw. Hindernisse, sondern auch die sich bewegender Testobjekte bzw. Hindernisse überprüft werden. Nach einer anderen Ausführung kann das Testobjekt auch ein Kraftfahrzeug mit dem zu prüfenden Sensor sein oder das Testobjekt kann ein zu prüfender Sensor sein, welcher hierzu auf einem verfahrbaren Fahrgestell positioniert sein kann. Besonders vorteilhaft ist es dabei, dass aufgrund der gesteuerten Verfahrbarkeit des Lichtsimulators und der gesteuerten Verfahrbarkeit des Kraftfahrzeugs bzw. des Sensors Abstände und Winkel zwischen dem Lichtstrahler und dem zu prüfenden Sensor stets reproduzierbar eingestellt werden können und damit Tests wiederholt unter gleichen Bedingungen durchgeführt werden können. Beispielsweise kann hierzu auch bei einer Simulation des Sonnenstandsverlaufs der Lichtsimulator stets parallel zu einer Bewegungsbahn des Kraftahrzeugs geführt werden, um den Abstand und Einstrahlwinkel des Simulators zu dem Fahrzeug stets konstant zu halten. Der Lichtsimulator und das Testobjekt melden in diesem Fall ihre aktuelle Position an die Steuereinheit(-en) zurück, woraufhin die Steuereinheit die Bahnkurve und/oder den zeitlichen Verlauf des Verfahrens entlang der Bahnkurve erneut berechnet.

Bei dem Verfahren ist es entsprechend vorteilhaft, wenn die Prüfvorrichtung wenigstens ein Testobjekt aufweist und Positions- und/oder Bewegungsdaten des Testobjekts an die Steuereinheit übermittelt werden und von der Steuereinheit zur Steuerung des Lichtsimulators, insbesondere zur Berechnung der Bahnkurve des Lichtsimulators, herangezogen werden.

Weiterhin ist es vorteilhaft, wenn die Bahnkurve des Lichtsimulators und die Position und/oder die Bahnkurve des wenigstens eines Testobjekts mittels der Steuereinheit und/oder der weiteren Steuereinheit in Echtzeit zueinander steuerbar sind bzw. bei dem Verfahren in Echtzeit zueinander gesteuert werden. Änderungen bei der Berechnung der Bahnkurve und bei einem Verfahren entlang der Bahnkurve können hierdurch ohne Verzögerungen durch die Datenverarbeitung umgesetzt werden. Hierdurch können Testszenarien jederzeit reproduzierbar nachgebildet werden. Dies ermöglicht es auch, beispielsweise Kamerasysteme, Lidarsysteme usw. regelmäßig zu testen.

Um wiederholte Tests reproduzierbar durchführen zu können, ist es zudem vorn Vorteil, wenn die Prüfvorrichtung, insbesondere die Steuereinheit der Prüfvorrichtung, eine Speichereinheit aufweist. Dies ermöglicht es, Bahnkurven des Lichtsimulators und/oder von Testobjekten sowie weitere Einstellungen des Lichtsimulators insbesondere bzgl. der mechanischen Position und Lichtbedingungen als Bewegungsprofile abzuspeichern.

Von Vorteil ist es zudem, wenn die Prüfvorrichtung, zumindest jedoch der Lichtsimulator, witterungsbeständig ausgeführt ist. Der Lichtsimulator bzw. die Prüfvorrichtung kann hierdurch auch in einer Prüfvorrichtung bzw. einem Teststand eingesetzt werden, in dem weitere Umweltbedingungen wie Regen, Schnee oder Nebel simuliert werden, wodurch noch weitreichendere Testszenarien möglich sind.

Weitere Vorteile der Erfindung werden anhand der nachfolgend dargestellten Ausführungsbeispiele beschrieben. Es zeigen:
- **Figur 1**: eine Prüfvorrichtung zum Prüfen von Lichteinflüssen auf die Umfeld- und/oder Objekterkennung durch Sensoren in einer schematischen Draufsicht als Übersichtsdarstellung,
- **Figur 2**: eine Prüfvorrichtung zum Prüfen von Lichteinflüssen auf die Umfeld- und/oder Objekterkennung durch Sensoren in einer schematischen Seitenansicht,
- **Figur 3**: eine schematische Seitenansicht eines Lichtsimulators einer Prüfvorrichtung zum Prüfen von Lichteinflüssen auf die Umfeld- und/oder Objekterkennung durch Sensoren,
- **Figur 4**: eine schematische Detailansicht eines Lichtstrahlers eines Lichtsimulators,
- **Figur 5**: eine schematische Draufsicht einer weiteren Ausführung einer Prüfvorrichtung zum Prüfen von Lichteinflüssen auf die Umfeld- und/oder Objekterkennung durch Sensoren, sowie
- **Figur 6**: eine weitere Ausführung einer Prüfvorrichtung zum Prüfen von Lichteinflüssen auf die Umfeld- und/oder Objekterkennung durch Sensoren in einer schematische Draufsicht.

Bei der nachfolgenden Beschreibung der Ausführungsbeispiele werden identische oder in ihrer Gestaltung und/oder Wirkweise zumindest vergleichbare Merkmale mit gleichen Bezugszeichen versehen. Weiterhin werden diese lediglich bei ihrer erstmaligen Erwähnung detailliert erläutert, während bei den folgenden Ausführungsbeispielen lediglich auf die Unterschiede zu den bereits beschriebenen Ausführungsbeispielen eingegangen wird. Weiterhin sind aus Gründen der Übersichtlichkeit von mehreren identischen Bauteilen bzw. Merkmalen oftmals nur eines oder nur einige wenige beschriftet.

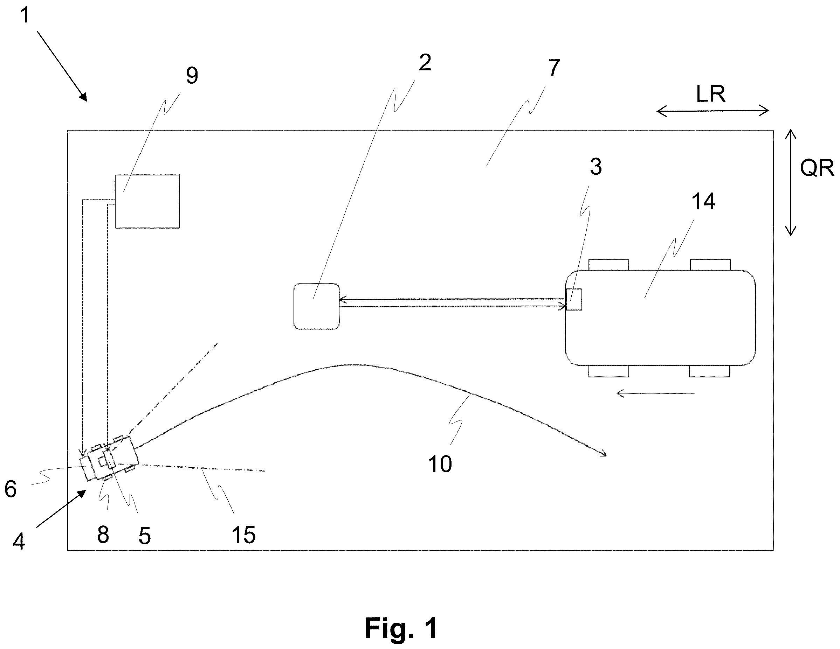

Figur 1 zeigt eine Prüfvorrichtung 1 zum Prüfen von Lichteinflüssen auf die Umfeld- und/oder Objekterkennung durch Sensoren 3 in einer schematischen Übersichtsdarstellung. Die Prüfvorrichtung 1 ist dabei in einer schematischen Draufsicht gezeigt und umfasst wenigstens einen Lichtsimulator 4 mit wenigstens einem Lichtstrahler 5, mittels welchem verschiedene Lichtbedingungen innerhalb eines Prüffeldes 7 simuliert werden können, sowie eine Steuereinheit 9 zum Ansteuern des Lichtstrahlers 5 des Lichtsimulators 4. Schematisch ist mit strichpunktierten Linien ein Lichtkegel 15 des Lichtstrahlers 5 angedeutet. Das Prüffeld 7 ist vorzugsweise in einem Innenraum, beispielsweise in einer Halle, angeordnet.

Mittels der Prüfvorrichtung 1 können einzelne Sensoren 3 oder auch Sensorsysteme insbesondere von Kraftfahrzeugen 14 überprüft werden. Dies ist vorliegend exemplarisch dargestellt. Dabei ist innerhalb des Prüffeldes 7 ein Kraftfahrzeug 14 gezeigt, das beispielhaft mit einem Sensor 3 versehen ist. In der Realität ist ein Kraftfahrzeug 14 natürlich mit einer Vielzahl von unterschiedlichen Sensoren 3 versehen. Dabei kommen verschiedenartige Sensoren 3 u.a. in Form von Ultraschallsensoren, Kameras, Lidar- und Radarsensoren zum Einsatz. Ebenfalls ist ein zu erkennendes Testobjekt 2 dargestellt. Weiterhin ist mit Pfeilen ein vom Sensor 3 ausgesendetes Messsignal sowie ein vom Testobjekt 2 reflektiertes bzw. vom Sensor 3 wieder empfangenes Messsignal dargestellt. Die Sensoren 3 werden durch verschiedene Lichteinflüsse wie wechselnde Helligkeiten, unterschiedliche Wellenlängen bzw. Lichtspektren, schnelle Lichtwechsel, verschiedene Einstrahlwinkel und dergleichen in unterschiedlichem Ausmaß gestört bzw. geblendet und können deshalb Objekte wie z.B. Hindernisse und andere Verkehrsteilnehmer nicht mehr zuverlässig erkennen. Um die Sensoren 3 zu verbessern, zu optimieren oder auch zu validieren, wird deshalb mittels der Prüfvorrichtung 1 die Umfeld- und oder Objekterkennung durch die Sensoren 3 unter verschiedensten Lichtverhältnissen getestet. D.h. es wird untersucht, auf welche Weise verschiedene Lichteinflüsse die Auswertung des Messsignals durch den Sensor 3 beeinflussen. Ebenso wird untersucht, unter welchen Bedingungen Testobjekte 2 noch erkannt werden können und unter welchen nicht. Hierzu können auch verschiedene Testszenarien mit stehenden oder bewegten Testobjekten 2 sowie stehendem oder bewegtem Kraftfahrzeug 14 bzw. Sensor 3 abgebildet werden.

Bei der vorgeschlagenen Prüfvorrichtung 1 ist der Lichtsimulator 4 auf einem verfahrbaren Fahrgestell 8 montierbar und kann deshalb durch das Prüffeld 7 bewegt werden. Das Fahrgestell 8 weist hierzu einen Antrieb 6 auf, welchem durch die Steuereinheit 9 der Prüfvorrichtung 1 eine Bahnkurve 10 vorgegeben werden kann, entlang welcher das Fahrgestell 8 bewegt werden kann. Das Fahrgestell 8 ist hierzu mit der Steuereinheit 9 signalübertragend verbunden, wie durch die punktierte Linie dargestellt. Dadurch, dass der Lichtsimulator 4 zumindest in einer Längsrichtung LR und einer Querrichtung QR der Prüfvorrichtung 1 innerhalb des Prüffeldes 7 verfahrbar ist, können wesentlich vielseitigere Testszenarien realitätsnah abgebildet werden, als dies mit den statischen Lichtsimulatoren 4 des Standes der Technik möglich war. Der zu prüfende Sensor 3 bzw. das Kraftfahrzeug 14 kann sich während der Tests statisch in einer Prüfposition befinden oder aber auch durch das Prüffeld 7 bewegt werden, wie durch den Pfeil unterhalb des Kraftfahrzeugs 14 angedeutet.

Um den Lichtstrahler 5 anzusteuern, ist die Steuereinheit 9 ebenfalls signalübertragend mit dem Lichtstrahler 5 verbunden, wie ebenfalls durch eine punktierte Linie dargestellt. Je nach Ausführung des Lichtstrahlers 5 kann die Steuereinheit zu verschiedenen Zeitpunkten verschiedene Lichtverhältnisse einstellen. Insbesondere kann die Intensität des Lichtes und je nach Ausführung auch ein Lichtspektrum verändert werden. Dies kann bei der hier gezeigten Prüfvorrichtung 1 in vorteilhafter Weise auch während des Verfahrens des Lichtsimulators 4 erfolgen.

Wenn weitere Einstellmöglichkeiten bezüglich des Lichtstrahlers 5 und/oder weitere Verfahrmöglichkeiten des Lichtsimulators 4 bestehen, sind noch weitreichendere Testszenarien möglich, wie anhand der folgenden Figuren noch weiter ausgeführt wird.

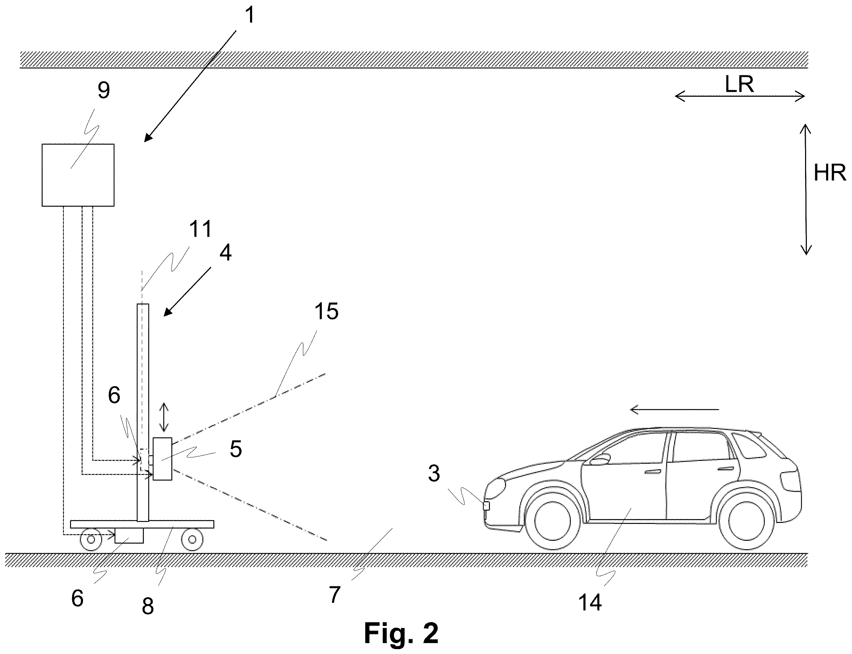

Figur 2 zeigt eine Prüfvorrichtung 1 zum Prüfen von Lichteinflüssen auf die Umfeld- und/oder Objekterkennung durch Sensoren 3 in einer schematischen Seitenansicht. Erkennbar ist wiederum der Lichtsimulator 4, welcher auf einem verfahrbaren Fahrgestell 8 montiert ist sowie ein Kraftfahrzeug 14 mit einem Sensor 3. Gemäß der hier dargestellten Ausführung ist der Lichtstrahler 5 des Lichtsimulators 4 entlang einer Hochachse 11 des Lichtsimulators 4 verfahrbar, wie durch den Doppelpfeil angedeutet. Zum Verfahren des Lichtstrahler 5 entlang der Hochachse 11 ist ein Antrieb 6 vorgesehen, welcher durch die Steuereinheit 9 angesteuert wird. Hierdurch ist der Lichtstrahler 5 auch in einer Hochrichtung HR innerhalb des Prüffeldes 7 verfahrbar. Ebenso wie zuvor beschrieben ist weiterhin der Lichtsimulator 4 mittels des Fahrgestells 8 und des Antriebs 6 innerhalb des Prüffeldes 7 verfahrbar. Das Verfahren des Lichtstrahlers 5 entlang der Hochachse 11 kann dabei während des Verfahrens des Fahrgestells 8 mit dem Lichtsimulator 4 erfolgen. Es besteht somit in vorteilhafter Weise die Möglichkeit, die Lichtverhältnisse auch während der Fahrt des Lichtsimulators 4 zu verändern. So können beispielsweise mittels ein und desselben Lichtsimulators 4 Testszenarien wie entgegenkommende oder querende Verkehrsteilnehmer aus verschiedenen Richtungen simuliert werden. Ebenso können verschiedene Tageslichtverhältnisse auch im Wechsel simuliert werden. Durch die Verstellbarkeit des Lichtstrahlers 5 entlang der Hochachse 11 kann zudem auch der Abstand und der Einstrahlwinkel des erzeugten Lichtes auf den Sensor 3 verändert werden. Alternativ oder zusätzlich zu der hier gezeigten Ausführung wäre es jedoch auch denkbar, das gesamte Fahrgestell 8 in einer Hochrichtung HR zu verfahren.

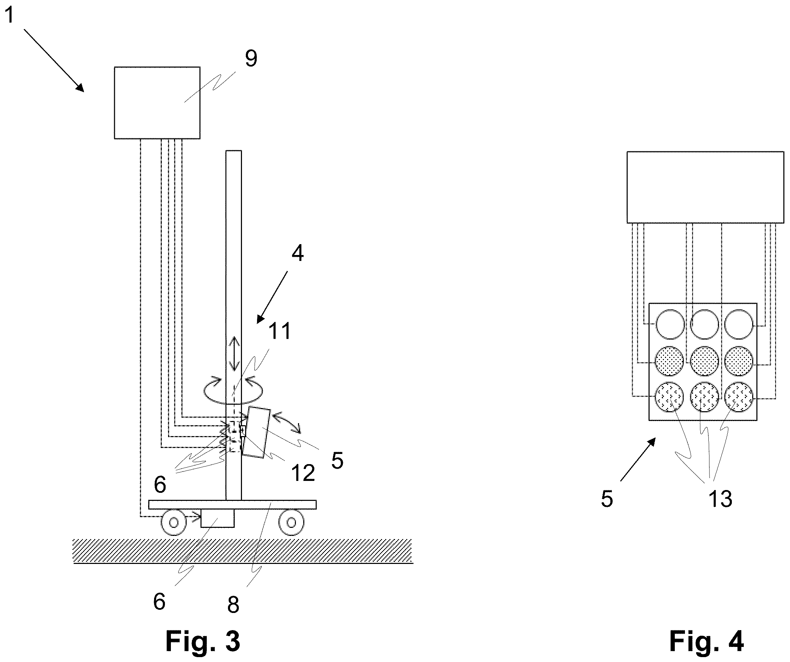

Figur 3 zeigt eine schematische Detaildarstellung eines Lichtsimulators 4 in einer Seitenansicht. Dabei ist wiederum der Antrieb 6 zum Verfahren des Fahrgestells 8 zu erkennen sowie der Antrieb 6 zum Verfahren des Lichtstrahlers 5 entlang der Hochachse 11. Der vorliegend dargestellte Lichtsimulator 4 weist zudem einen weiteren Antrieb 6 auf, mittels welchem eine Drehung des Lichtstrahlers 5 um die Hochachse 11 verändert werden kann. Außerdem weist der vorliegend dargestellte Lichtsimulator 4 einen weiteren Antrieb 6 auf, mittels welchem eine Neigung des Lichtstrahlers 5 um eine Querachse 12 verändert werden kann. Dabei können in vorteilhafter Weise sowohl die Drehung als auch die Neigung als auch die Höhenposition des Lichtstrahlers 5 auch während des Verfahrens des Lichtsimulators 4 mittels des Fahrgestells 8 verändert werden, wodurch zahlreiche Testszenarien sehr realitätsnah simuliert werden können.

Können während der Fahrt nicht nur die Ausrichtung des Lichtstrahlers 5 bezüglich der Drehung, Neigung und Höhenposition, sondern zugleich auch die Lichteigenschaften des Lichtstrahlers 5 mittels der Steuereinheit 9 weitreichend verändert werden, so kann hierdurch beispielsweise auch der Sonnenstandsverlauf von Sonnenaufgang über den Zenit bis zum Sonnenuntergang realitätsgetreu dargestellt werden. Somit können Sensoren 3 unter sämtlichen auftretenden Tageslichtbedingungen mittels einer einzigen Prüfvorrichtung 1 getestet werden.

Figur 4 zeigt ein Beispiel eines Lichtstrahlers 5, bei welchen weitreichende Veränderungen der Lichteigenschaften auch während der Fahrt des Lichtsimulators 4 möglich sind. Der Lichtstrahler 5 weist hierzu eine Vielzahl einzelner Lichtquellen 13 auf, welche jeweils zumindest gruppenweise, ggf. auch einzeln durch die Steuereinheit 9 ansteuerbar sind. Hierdurch ist es beispielsweise möglich, durch Ein- und Ausschalten einzelner Lichtquellen 13 die Intensität bzw. Beleuchtungsstärke (Lux) des Lichtstrahlers 5 zu verändern.

Bei dem vorliegend gezeigten Ausführungsbeispiel weist der Lichtstrahler 5 zudem verschiedene Lichtquellen 13 auf, wie durch die verschiedenen Schraffuren der einzelnen Lichtquellen 13 symbolisiert ist. Durch die Verwendung verschiedener Lichtquellen 13 ist es auch möglich, das Lichtspektrum bzw. den Wellenlängenbereich (nm) des Lichtstrahlers 5 weitreichend zu verändern. Dies erfolgt ebenfalls durch gezieltes Ein- und Ausschalten einzelner Lichtquellen 13. Natürlich ist es aber auch denkbar, lediglich gleichartige Lichtquellen 13 in einem Lichtstrahler 5 zu kombinieren, wenn die hierdurch darstellbaren Lichtverhältnisse für die geplanten Anwendungsfälle ausreichend sind.

Im gezeigten Beispiel emittieren beispielsweise die drei oberen Lichtquellen 13 ein rötliches Licht (Sonnenauf- und -untergang), während die drei mittleren Lichtquellen 13 ein eher weißes Licht (Mittagssonne) emittieren. Die drei mittleren Lichtquellen 13 können einen weiteren Wellenlängenbereich wie beispielsweise Vormittags- oder Nachmittagssonne abdecken. Durch Ein- und Ausschalten unterschiedlicher Anzahlen der Lichtquellen 13 jeweils einer Reihe kann somit nicht nur die Intensität eines bestimmten Lichts eines bestimmten Spektrums, sondern auch das Spektrum bzw. der Wellenlängenbereich des Lichtstrahlers 5 verändert werden. Die einzelnen Lichtquellen 13 können beispielsweise durch verschiedenen COB LEDs gebildet werden, welche insgesamt das Spektrum der Sonne in dem für Umfeldfeldsensoren relevanten Bereich von 380 bis 1550 nm (morgens bis abends) wiedergeben. Dies ermöglicht, wenn alle der kombinierten Strahler ihre maximale Helligkeit abgeben, eine Beleuchtungsstärke von bis zu 100.000 lm/m², was ungefähr der Mittagssonne bei klarem Himmel entspricht..

Durch die gleichzeitige Steuerung der Lichteigenschaften des Lichtstrahlers 5 mit den einzelnen, verschiedenen Lichtquellen 13 sowie der mechanischen Position des Lichtstrahlers 5 kann somit der Sonnenstandsverlauf nicht nur hinsichtlich der Lichtintensität und des Einfallswinkels des Lichts, sondern auch hinsichtlich des sich im Tagesverlauf verändernden Lichtspektrums realitätsgetreu dargestellt werden.

Es versteht sich, dass hinsichtlich der Ausführung des oder der Lichtstrahler 5 zahlreiche Abwandlungen möglich sind. Beispielsweise könnte die Anordnung der einzelnen Lichtquellen 13 nicht nur in Dreiergruppen, sondern beispielsweise auch in Zweier- oder Vierergruppen erfolgen. Dabei müssen gleichartige Lichtquellen 13 auch nicht zwangsläufig in einer Reihe angeordnet sein. Ebenso könnten die einzelnen Lichtquellen 13 statt wie hier gezeigt in Reihen auch in einer Art Kreisform angeordnet sein. Weiterhin ist auch eine Kombination mehrerer Miniaturstrahler mit nur einem einzigen Lampentyp denkbar.

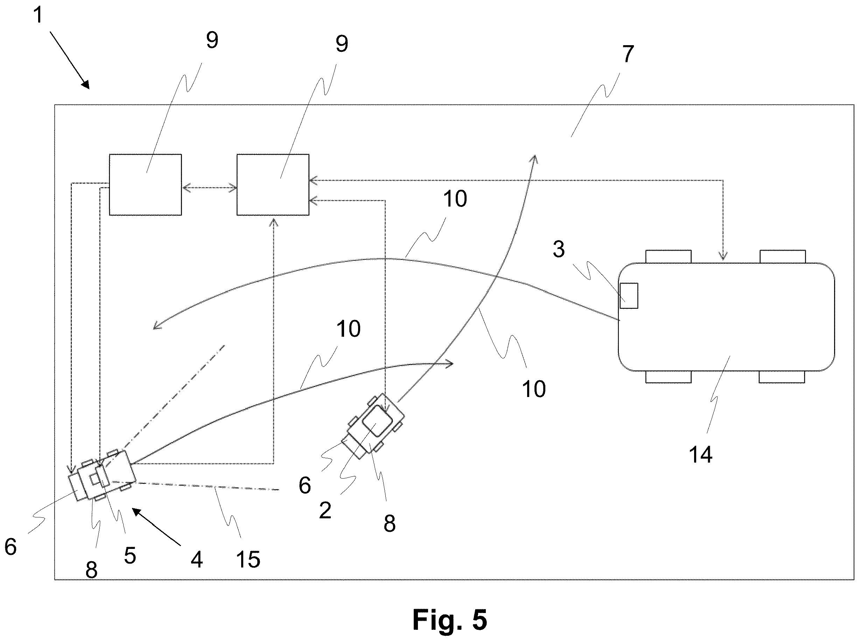

Figur 5 zeigt eine weitere Ausführung einer Prüfvorrichtung 1 zum Prüfen von Lichteinflüssen auf die Umfeld- und/oder Objekterkennung von Sensoren 3 in einer schematischen Draufsicht. Im Unterschied zu den zuvor gezeigten Ausführungsbeispielen ist hier jedoch kein stationäres Testobjekt 2 vorgesehen, sondern die Prüfvorrichtung 1 umfasst wenigstens ein Testobjekt 2, welches innerhalb des Prüffeldes 7 positionierbar bzw. gemäß dem vorliegenden Beispiel ebenso wie der Lichtsimulator 4 entlang einer vorgebbaren Bahnkurve 10 bewegbar ist. Zusätzlich ist bei vorliegendem Ausführungsbeispiel auch noch das Kraftfahrzeug 14 entlang einer vorgebbaren Bahnkurve 10 bewegbar.

Gemäß vorliegendem Beispiel werden das Kraftfahrzeug 14 sowie das verfahrbare Testobjekt 2 mittels einer weiteren Steuereinheit 9 gesteuert, welche mit der Steuereinheit 9 des Lichtsimulators 4 in signalübertragender Verbindung steht. Das Testobjekt 2 kann ebenso wie der Lichtsimulator 2 auf einem mittels eines Antriebs 6 verfahrbaren Fahrgestell 8 angeordnet sein. Ebenso kann das Kraftfahrzeug 14 auf einer mittels eines weiteren Antriebs 6 verfahrbaren Plattform (nicht gezeigt) angeordnet sein, wobei dann die Plattform mittels der weiteren Steuereinheit 9 ansteuerbar ist. Ebenso wäre es denkbar, dass das Kraftfahrzeug 14 durch einen Fahrroboter gefahren wird, welcher durch die weitere Steuereinheit 9 gesteuert wird.

Gemäß der vorliegenden Darstellung erhalten der Lichtsimulator 4, das Testobjekt 2 sowie das Kraftfahrzeug 14 nicht nur die Steuerdaten, um entlang der vorgebbaren Bahnkurve 10 bewegt zu werden, sondern sie melden zugleich auch ihre aktuelle Position und ggf. auch Bewegungsdaten wie beispielsweise ihre aktuelle Geschwindigkeit an eine der Steuereinheiten 9 zurück, wie durch die zur weiteren Steuereinheit 9 zeigenden Steuerpfeile dargestellt. Die Steuereinheit 9 ist hierdurch in der Lage, auf bestimmte Ereignisse zu reagieren und insbesondere die Bahnkurve 10 des Lichtsimulators 4 gegebenenfalls neu zu berechnen. Ebenso könnte gegebenenfalls auch die Bahnkurve 10 des Testobjekts 2 und/oder des Sensors 3 bzw. des Kraftfahrzeugs 14 angepasst werden, wenn bestimmte Ereignisse dies erforderlich machen. Vorzugsweise erfolgt die Signalübertragung zwischen den Steuereinheiten 9, dem Testobjekt 2, dem Lichtsimulator 4 und dem Kraftfahrzeug 14 bzw. dem Sensor 3 so schnell, dass diese in Echtzeit zueinander gesteuert werden können. Beispielsweise kann durch die Rückmeldung der Position und/oder der Bewegungsdaten des Kraftfahrzeugs 14 erfasst werden, ob die tatsächliche Bahnkurve 10 des Kraftfahrzeugs von der vorgegebenen Bahnkurve 10 abweicht. Die Position oder die Bahnkurve 10 des Lichtsimulators 4 kann somit an die abweichende Bahnkurve 10 des Kraftfahrzeugs 14 angepasst werden, damit die gewünschten Testbedingungen wie beispielsweise ein bestimmter Abstand zwischen Lichtsimulator 4 und Kraftfahrzeug 14 eingehalten werden können. Somit ist auch möglich, Testszenarien reproduzierbar nachzubilden.

Im gezeigten Beispiel weist die Prüfvorrichtung 1 eine weitere Steuereinheit 9 auf, welche sowohl von dem Lichtsimulator 4 als auch von dem Testobjekt 2 als auch von dem Kraftfahrzeug 14 bzw. dem Sensor 3 die Positionsdaten und Bewegungsabläufe erhält und diese verarbeitet. Die weitere Steuereinheit 9 errechnet aus diesen Daten angepasste Echtzeittrajektorien bzw. Bewegungsabläufe und leitet diese an die Steuereinheit 9 des Lichtsimulators 4 weiter, welche daraus wiederum die Steuerdaten für den Lichtsimulator 4 errechnet. Die weitere Steuereinheit 9 bildet in diesem Fall eine Art übergeordneten Leitstand für die gesamte Prüfvorrichtung 1 und ermöglicht eine Echtzeitsteuerung sämtlicher Testobjekte 2, des Kraftfahrzeugs 14 bzw. des oder der Sensoren 3 und des oder der Lichtsimulatoren 4. Natürlich könnten jedoch auch sämtliche dieser Funktionen in einer einzigen Steuereinheit 9 vereint sein.

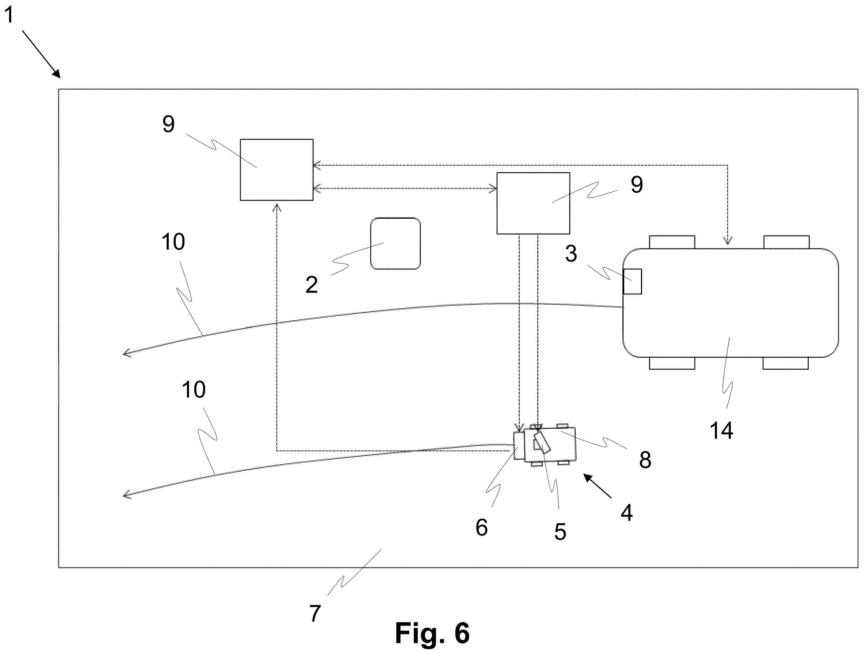

Figur 6 zeigt eine weitere Ausführung einer Prüfvorrichtung 1 zum Prüfen von Lichteinflüssen auf die Umfeld- und/oder Objekterkennung von Sensoren 3 in einer schematischen Draufsicht. Das Testobjekt 2 ist hier wiederum als stationäres Testobjekt 2 vorgesehen, ebenso könnte es jedoch auch wie in der Figur 5 gezeigt innerhalb des Prüffeldes 7 positionierbar bzw. verfahrbar sein. Das Kraftfahrzeug 14 ist hingegen wie auch in der Figur 5 beschrieben ebenso wie der Lichtsimulator 4 entlang einer vorgebbaren Bahnkurve 10 bewegbar. Zu erkennen ist weiterhin, dass, wie auch schon zu Figur 2 und 3 beschrieben, die Neigung sowie die Drehung und die Höhe des wenigstens einen Strahlers 5 auch während des Verfahrens des Lichtsimulators 4 verändert werden können.

Das Kraftfahrzeug 14 wird auch hier mittels einer weiteren Steuereinheit 9 gesteuert, welche mit der Steuereinheit 9 des Lichtsimulators 4 in signalübertragender Verbindung steht. Ebenso melden auch bei dieser Ausführung das Kraftfahrzeug 14 sowie der Lichtsimulator 4 ihre aktuelle Position und ggf. Bewegungsdaten an eine übergeordnete Steuereinheit 9 zurück, welche aus diesen Informationen heraus die Bahnkurve 10 des Kraftfahrzeugs 14 und gegebenenfalls auch des Lichtsimulators 4 neu berechnet. Es versteht sich, dass auch hier sämtliche der genannten Funktionen in einer einzigen Steuereinheit 9 vereint sein könnten.

Im vorliegend gezeigten Beispiel sind die Bahnkurve 10 des Kraftfahrzeugs 14 sowie des Lichtsimulators 4 parallel. Durch die Rückmeldung der aktuellen Position und Bewegungsdaten des Lichtsimulators 4 des Kraftfahrzeugs 14 an die Steuereinheit 9 kann der Bewegungsablauf und die Parallelität der beiden Bahnkurve 10 über das gesamte Testszenario eingehalten werden. Dies ist beispielsweise auch bei einem Testszenario wichtig, bei welchem der gesamte Sonnenstandsverlauf von Sonnenaufgang bis Sonnenuntergang nachgebildet wird, da auf diese Weise der Winkel zwischen dem Strahler 5 und dem Kraftfahrzeug 14 konstant gehalten werden kann.

In den gezeigten Beispielen ist jeweils nur ein Lichtstrahler 5 auf einem verfahrbaren Fahrgestell 8 angeordnet. Es versteht sich, dass auch zwei oder mehr Lichtstrahler 5 auf einem gemeinsamen Fahrgestell 8 angeordnet sein könnten. Ebenso könnte eine Prüfvorrichtung auch zwei oder mehr Lichtsimulatoren 4 beinhalten.

### Bezeichenliste

- 1: Prüfvorrichtung
- 2: Testobjekt
- 3: Sensor
- 4: Lichtsimulator
- 5: Lichtstrahler
- 6: Antrieb
- 7: Prüffeld
- 8: Fahrgestell
- 9: Steuereinheit
- 10: Bahnkurve
- 11: Hochachse
- 12: Querachse
- 13: Lichtquelle
- 14: Kraftfahrzeug
- 15: Lichtkegel

- LR: Längsrichtung
- HR: Hochrichtung
- QR: Querrichtung

## Patentansprüche

1. Prüfvorrichtung (1) zum Prüfen von Lichteinflüssen auf die Umfeld- und/oder Objekterkennung durch Sensoren (3), insbesondere durch Umfeldsensoren von Kraftfahrzeugen (14),
mit wenigstens einem Lichtsimulator (4) mit wenigstens einem Lichtstrahler (5) zur Simulation verschiedener Lichtbedingungen innerhalb eines Prüffeldes (7),
sowie mit einer Steuereinheit (9) zum Ansteuern des wenigstens einen Lichtstrahlers (5) des Lichtsimulators (4), **dadurch gekennzeichnet, dass** der Lichtsimulator (4) auf einem verfahrbaren Fahrgestell (8) montierbar ist und dass die Steuereinheit (9) ausgebildet ist, dem Fahrgestell (8) eine Bahnkurve (10) vorzugeben, entlang welcher das Fahrgestell (8) zumindest in einer Längsrichtung (LR) und einer Querrichtung (QR) innerhalb des Prüffeldes (7) verfahrbar ist.

2. Prüfvorrichtung (1) nach dem vorhergehenden Anspruch, **dadurch gekennzeichnet, dass** die Steuereinheit (9) weiterhin ausgebildet ist, das Fahrgestell (8) in einer Hochrichtung (HR) innerhalb des Prüffeldes (7) zu verfahren.

3. Prüfvorrichtung (1) nach einem der vorhergehenden Ansprüche, **dadurch gekennzeichnet, dass** mittels der Steuereinheit (9) der Lichtstrahler (5) des Lichtsimulators (4) während des Verfahrens des Fahrgestells (8) entlang der Bahnkurve (10) entlang einer Hochachse (11) des Lichtsimulators (4) verfahrbar ist.

4. Prüfvorrichtung (1) nach einem der vorhergehenden Ansprüche, **dadurch gekennzeichnet, dass** die Prüfvorrichtung (1) ein verfahrbares Fahrgestell (8) umfasst, wobei der Lichtsimulator (4) auf dem verfahrbaren Fahrgestell (8) montiert ist.

5. Prüfvorrichtung (1) nach einem der vorhergehenden Ansprüche, **dadurch gekennzeichnet, dass** mittels der Steuereinheit (9) eine Drehung des wenigstens einen Lichtstrahlers (5) um eine Hochachse (11) des Lichtsimulators (4) veränderbar ist und/oder dass mittels der Steuereinheit (9) eine Neigung des wenigstens einen Lichtstrahlers (5) um eine Querachse (12) veränderbar ist.

6. Prüfvorrichtung (1) nach einem der vorhergehenden Ansprüche, **dadurch gekennzeichnet, dass** die Drehung und/oder die Neigung des wenigstens einen Lichtstrahlers (5) während des Verfahrens des Fahrgestells (8) entlang der Bahnkurve (10) veränderbar ist.

7. Prüfvorrichtung (1) nach einem der vorhergehenden Ansprüche, **dadurch gekennzeichnet, dass** mittels der Steuereinheit (9) eine Intensität des wenigstens einen Lichtstrahlers (5) und/oder ein Lichtspektrum des wenigstens einen Lichtstrahlers (5) während des Verfahrens des Fahrgestells (8) entlang der Bahnkurve (10) veränderbar sind.

8. Prüfvorrichtung (1) nach dem vorhergehenden Anspruch, **dadurch gekennzeichnet, dass** der Lichtstrahler (5) mehrere Lichtquellen (13) aufweist, welche durch die Steuereinheit (9) gruppenweise oder einzeln ansteuerbar sind.

9. Prüfvorrichtung (1) nach einem der vorhergehenden Ansprüche, **dadurch gekennzeichnet, dass** die Intensität und/oder das Lichtspektrum und/oder die Drehung und/oder die Neigung des wenigstens einen Lichtstrahlers (5) gleichzeitig mittels der Steuereinheit (9) verstellbar sind.

10. Prüfvorrichtung (1) nach einem der vorhergehenden Ansprüche, **dadurch gekennzeichnet, dass** die Prüfvorrichtung (1) wenigstens ein Testobjekt (2) aufweist, welches mittels der Steuereinheit (9) und/oder einer weiteren Steuereinheit (9) innerhalb des Prüffeldes (7) positionierbar und vorzugsweise entlang einer vorgebbaren Bahnkurve (10) bewegbar ist.

11. Prüfvorrichtung (1) nach einem der vorhergehenden Ansprüche, **dadurch gekennzeichnet, dass** die Steuereinheit (9) und/oder eine weitere Steuereinheit (9) weiterhin ausgebildet ist, einem zu prüfenden Sensor (3) und/oder einem zu prüfenden Kraftfahrzeug (14) eine Bahnkurve (10) vorzugeben, entlang welcher der Sensor (3) und/oder das zu prüfende Kraftfahrzeug (14) zumindest in der Längsrichtung (LR) und der Querrichtung (QR) innerhalb des Prüffeldes (7) verfahrbar ist.

12. Prüfvorrichtung (1) nach dem vorhergehenden Anspruch, **dadurch gekennzeichnet, dass** die Bahnkurve (10) des Lichtsimulators (4) und/oder die Position und/oder die Bahnkurve (10) des wenigstens eines Testobjekts (2) und/oder die Position und/oder die Bahnkurve (10) des zu prüfenden Sensors (3) und/oder des zu prüfenden Kraftfahrzeugs (14) mittels der Steuereinheit (9) und/oder der weiteren Steuereinheit (9) in Echtzeit zueinander steuerbar sind.

13. Verwendung einer Prüfvorrichtung (1) nach einem oder mehreren der vorherigen Ansprüche zum Testen von Lichteinflüssen auf die Umfeld- und/oder Objekterkennung von Umfeldsensoren von Kraftfahrzeugen (14).

14. Verfahren zum Testen von Lichteinflüssen auf die Umfeld- und/oder Objekterkennung von Sensoren (3), insbesondere von Umfeldsensoren von Kraftfahrzeugen (14), mit einer Prüfvorrichtung (1) nach einem der Ansprüche 1 - 12.

15. Verfahren nach dem vorhergehenden Anspruch, **dadurch gekennzeichnet, dass** mittels der Prüfvorrichtung (1) ein vollständiger Sonnenstandsverlauf simuliert wird, wobei während des Verfahrens des Fahrgestells (8) gleichzeitig die Intensität und/oder das Lichtspektrum und/oder die Drehung und/oder die Neigung des wenigstens einen Lichtstrahlers (5) mittels der Steuereinheit (9) verändert werden.

16. Verfahren nach einem der beiden vorhergehenden Ansprüche, **dadurch gekennzeichnet, dass** die Prüfvorrichtung (1) wenigstens ein Testobjekt (2) aufweist und dass Positions- und/oder Bewegungsdaten des Testobjekts (2) an die Steuereinheit (9) übermittelt werden und von der Steuereinheit (9) zur Steuerung des Lichtsimulators (4), insbesondere zur Berechnung der Bahnkurve (10) des Lichtsimulators (4), herangezogen werden.

17. Verfahren nach dem vorhergehenden Anspruch, **dadurch gekennzeichnet, dass** die Bahnkurve (10) des Fahrgestells (8) des Lichtsimulators (4) und die Position und/oder die Bahnkurve (10) des wenigstens eines Testobjekts (2) mittels der Steuereinheit (9) in Echtzeit zueinander gesteuert werden.

## Geänderte Patentansprüche

### Geänderte Patentansprüche gemäss Regel 137(2) EPÜ.

1. Prüfvorrichtung (1) zum Prüfen von Lichteinflüssen auf die Umfeld- und/oder Objekterkennung durch Umfeldsensoren von Kraftfahrzeugen (14),
mit wenigstens einem Lichtsimulator (4) mit wenigstens einem Lichtstrahler (5) zur Simulation verschiedener Lichtbedingungen innerhalb eines Prüffeldes (7),
sowie mit einer Steuereinheit (9) zum Ansteuern des wenigstens einen Lichtstrahlers (5) des Lichtsimulators (4), wobei mittels der Prüfvorrichtung unterschiedliche Testszenarien realitätsnah nachgebildet werden können, **dadurch gekennzeichnet, dass** der Lichtsimulator (4) auf einem verfahrbaren Fahrgestell (8) montierbar ist und dass die Steuereinheit (9) ausgebildet ist, dem Fahrgestell (8) eine Bahnkurve (10) vorzugeben, entlang welcher das Fahrgestell (8) zumindest in einer Längsrichtung (LR) und einer Querrichtung (QR) innerhalb des Prüffeldes (7) verfahrbar ist.

2. Prüfvorrichtung (1) nach dem vorhergehenden Anspruch, **dadurch gekennzeichnet, dass** die Steuereinheit (9) weiterhin ausgebildet ist, das Fahrgestell (8) in einer Hochrichtung (HR) innerhalb des Prüffeldes (7) zu verfahren.

3. Prüfvorrichtung (1) nach einem der vorhergehenden Ansprüche, **dadurch gekennzeichnet, dass** mittels der Steuereinheit (9) der Lichtstrahler (5) des Lichtsimulators (4) während des Verfahrens des Fahrgestells (8) entlang der Bahnkurve (10) entlang einer Hochachse (11) des Lichtsimulators (4) verfahrbar ist.

4. Prüfvorrichtung (1) nach einem der vorhergehenden Ansprüche, **dadurch gekennzeichnet, dass** die Prüfvorrichtung (1) ein verfahrbares Fahrgestell (8) umfasst, wobei der Lichtsimulator (4) auf dem verfahrbaren Fahrgestell (8) montiert ist.

5. Prüfvorrichtung (1) nach einem der vorhergehenden Ansprüche, **dadurch gekennzeichnet, dass** mittels der Steuereinheit (9) eine Drehung des wenigstens einen Lichtstrahlers (5) um eine Hochachse (11) des Lichtsimulators (4) veränderbar ist und/oder dass mittels der Steuereinheit (9) eine Neigung des wenigstens einen Lichtstrahlers (5) um eine Querachse (12) veränderbar ist.

6. Prüfvorrichtung (1) nach einem der vorhergehenden Ansprüche, **dadurch gekennzeichnet, dass** die Drehung und/oder die Neigung des wenigstens einen Lichtstrahlers (5) während des Verfahrens des Fahrgestells (8) entlang der Bahnkurve (10) veränderbar ist.

7. Prüfvorrichtung (1) nach einem der vorhergehenden Ansprüche, **dadurch gekennzeichnet, dass** mittels der Steuereinheit (9) eine Intensität des wenigstens einen Lichtstrahlers (5) und/oder ein Lichtspektrum des wenigstens einen Lichtstrahlers (5) während des Verfahrens des Fahrgestells (8) entlang der Bahnkurve (10) veränderbar sind.

8. Prüfvorrichtung (1) nach dem vorhergehenden Anspruch, **dadurch gekennzeichnet, dass** der Lichtstrahler (5) mehrere Lichtquellen (13) aufweist, welche durch die Steuereinheit (9) gruppenweise oder einzeln ansteuerbar sind.

9. Prüfvorrichtung (1) nach einem der vorhergehenden Ansprüche, **dadurch gekennzeichnet, dass** die Intensität und/oder das Lichtspektrum und/oder die Drehung und/oder die Neigung des wenigstens einen Lichtstrahlers (5) gleichzeitig mittels der Steuereinheit (9) verstellbar sind.

10. Prüfvorrichtung (1) nach einem der vorhergehenden Ansprüche, **dadurch gekennzeichnet, dass** die Prüfvorrichtung (1) wenigstens ein Testobjekt (2) aufweist, welches mittels der Steuereinheit (9) und/oder einer weiteren Steuereinheit (9) innerhalb des Prüffeldes (7) positionierbar und vorzugsweise entlang einer vorgebbaren Bahnkurve (10) bewegbar ist.

11. Prüfvorrichtung (1) nach einem der vorhergehenden Ansprüche, **dadurch gekennzeichnet, dass** die Steuereinheit (9) und/oder eine weitere Steuereinheit (9) weiterhin ausgebildet ist, einem zu prüfenden Sensor (3) und/oder einem zu prüfenden Kraftfahrzeug (14) eine Bahnkurve (10) vorzugeben, entlang welcher der Sensor (3) und/oder das zu prüfende Kraftfahrzeug (14) zumindest in der Längsrichtung (LR) und der Querrichtung (QR) innerhalb des Prüffeldes (7) verfahrbar ist.

12. Prüfvorrichtung (1) nach dem vorhergehenden Anspruch, **dadurch gekennzeichnet, dass** die Bahnkurve (10) des Lichtsimulators (4) und/oder die Position und/oder die Bahnkurve (10) des wenigstens eines Testobjekts (2) und/oder die Position und/oder die Bahnkurve (10) des zu prüfenden Sensors (3) und/oder des zu prüfenden Kraftfahrzeugs (14) mittels der Steuereinheit (9) und/oder der weiteren Steuereinheit (9) in Echtzeit zueinander steuerbar sind.

13. Verwendung einer Prüfvorrichtung (1) nach einem oder mehreren der vorherigen Ansprüche zum Testen von Lichteinflüssen auf die Umfeld- und/oder Objekterkennung von Umfeldsensoren von Kraftfahrzeugen (14).

14. Verfahren zum Testen von Lichteinflüssen auf die Umfeld- und/oder Objekterkennung von Umfeldsensoren von Kraftfahrzeugen (14), mit einer Prüfvorrichtung (1) nach einem der Ansprüche 1 - 12.

15. Verfahren nach dem vorhergehenden Anspruch, **dadurch gekennzeichnet, dass** mittels der Prüfvorrichtung (1) ein vollständiger Sonnenstandsverlauf simuliert wird, wobei während des Verfahrens des Fahrgestells (8) gleichzeitig die Intensität und/oder das Lichtspektrum und/oder die Drehung und/oder die Neigung des wenigstens einen Lichtstrahlers (5) mittels der Steuereinheit (9) verändert werden.

16. Verfahren nach einem der beiden vorhergehenden Ansprüche, **dadurch gekennzeichnet, dass** die Prüfvorrichtung (1) wenigstens ein Testobjekt (2) aufweist und dass Positions- und/oder Bewegungsdaten des Testobjekts (2) an die Steuereinheit (9) übermittelt werden und von der Steuereinheit (9) zur Steuerung des Lichtsimulators (4), insbesondere zur Berechnung der Bahnkurve (10) des Lichtsimulators (4), herangezogen werden.

17. Verfahren nach dem vorhergehenden Anspruch, **dadurch gekennzeichnet, dass** die Bahnkurve (10) des Fahrgestells (8) des Lichtsimulators (4) und die Position und/oder die Bahnkurve (10) des wenigstens eines Testobjekts (2) mittels der Steuereinheit (9) in Echtzeit zueinander gesteuert werden.
